(19) Europäisches Patentamt
European Patent Office
Office européen des brevets

(11) EP 0 761 767 A1

(12) EUROPÄISCHE PATENTANMELDUNG

(43) Veröffentlichungstag:
**12.03.1997 Patentblatt 1997/11**

(21) Anmeldenummer: **96112428.6**

(22) Anmeldetag: **01.08.1996**

(51) Int. Cl.[6]: **C09B 62/036**, C09B 62/517
// C09B62/10, C09B62/26,
C09B62/016

(84) Benannte Vertragsstaaten:
**AT BE CH DE FR GB IT LI NL**

(30) Priorität: **14.08.1995 DE 19529853**

(71) Anmelder: **BAYER AG**
**51368 Leverkusen (DE)**

(72) Erfinder:
- **Harms, Wolfgang, Dr.**
  **51519 Odenthal (DE)**
- **Herd, Karl-Josef, Dr.**
  **51519 Odenthal (DE)**
- **Brust, Willi**
  **42929 Wermelskirchen (DE)**

# (54) Aluminium-Phthalocyanin-Reaktivfarbstoffe

(57) Phthalocyanine der Formel

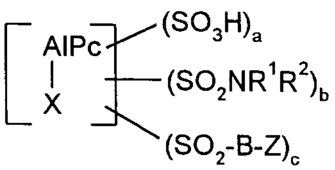

(I)

worin
Z ein faserreaktiver Rest ist, und die übrigen Substituenten und Indices die in der Beschreibung angegebene Bedeutung haben, weisen verbesserte anwendungstechnische Eigenschaften auf.

EP 0 761 767 A1

## Beschreibung

Die Erfindung betrifft neue Phthalocyanin-Reaktivfarbstoffe, ihre Herstellung und Verwendung.

Türkisfarbene und grüne Reaktivfarbstoffe auf Basis von Phthalocyaninen, insbesondere Kupfer- und Nickel-Phthalocyaninen, zum Färben von Baumwolle sind beispielsweise aus EP-A 611 259 und DE-A 3 930 738 bekannt. Aus DE-A 2 812 278 und 2 812 261 ist weiterhin bekannt, Aluminium-Phthalocyanine zum Bleichen von Textilien und zur Bekämpfung von Mikroorganismen zu verwenden. Die zum Färben eingesetzten Phthalocyanine weisen aber noch Nachteile im Hinblick auf anwendungstechnische Eigenschaften, insbesondere bei Kombinationsfärbungen mit anderen Reaktivchromophoren, auf.

Die Erfindung betrifft Aluminium-Phthalocyanin-Reaktivfarbstoffe, die in Form der freien Säure folgender Formel entsprechen

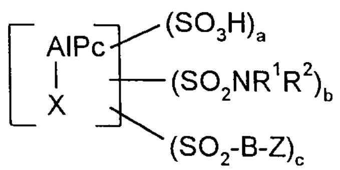

(1)

worin

a = eine Zahl von 0 bis 3,

b = eine Zahl von 0 bis 2,

c = eine Zahl von 0,5 bis 3,
wobei die Summe aus a + b + c vorzugsweise nicht kleiner als 2 und nicht größer als 4 ist,

$R^1$ und $R^2$ = unabhängig voneinander H, $C_1$-$C_6$-Alkyl, substituiertes $C_1$-$C_6$-Alkyl, insbesondere mit OH, $SO_3H$, $CO_2H$, $OSO_3H$, substituiertes $C_1$-$C_6$-Alkyl, Phenyl, substituiertes Phenyl, insbesondere mit OH, $SO_3H$ und $CO_2H$ substituiertes Phenyl, oder ein faserreaktiver Rest mit einer Sulfonylgruppe, insbesondere ein Rest der Struktur

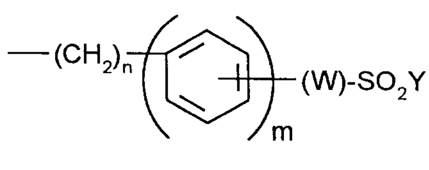

(I)

worin

n = 0 bis 3,

m = 0 oder 1
aber n + m = 1, 2, 3 oder 4

W = $-(CH_2)_{1-6}$, $-(CH_2)_2-O-(CH_2)_2-$ oder direkte Bindung,

Y = $CH=CH_2$, $CH_2CH_2Cl$, $CH_2CH_2OH$ oder $CH_2CH_2OSO_3H$,

oder die Gruppierung $NR^1R^2$ = Rest eines gesättigten heterocyclischen Ringsystems, wie z.B.

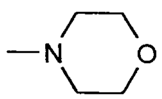 ; 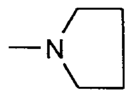 ; 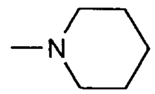 ;

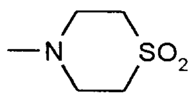 oder 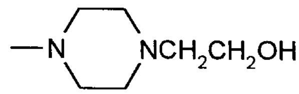 ,

B = N-haltiges Brückenglied, das über ein N-Atom mit dem $SO_2$-Rest verknüpft ist,

Z = faserreaktiver Rest und

X = OH, $OR^3$ oder ein über ein Bindeglied, insbesondere Sauerstoff, verknüpfter Phthalocyaninrest, insbesondere ein Rest der Formel (II)

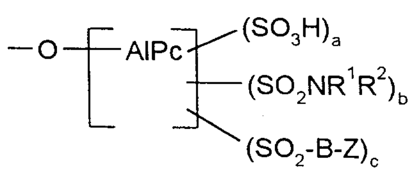

(II)

wobei die Substituenten $R^1$, $R^2$, B und Z in (II) eine der hierzu unter Formel (1) angegebene Bedeutung haben, vorzugsweise die identische Bedeutung, oder

X = Anion, insbesondere Sulfat, Carbonat, Acetat, Hydrogensulfat und Hydrogencarbonat,

$R^3$ = $C_1$-$C_6$-Alkyl, das gegebenenfalls mit OH, Halogen oder $C_1$-$C_4$-Alkoxy substituiert sein kann, Phenyl, das gegebenenfalls mit OH, $SO_3H$, $CO_2H$, $C_1$-$C_4$-Alkyl, $C_1$-$C_4$-Alkoxy oder Halogen substituiert sein kann,

Pc = Rest des Phthalocyanin-Ringsystems der Formel

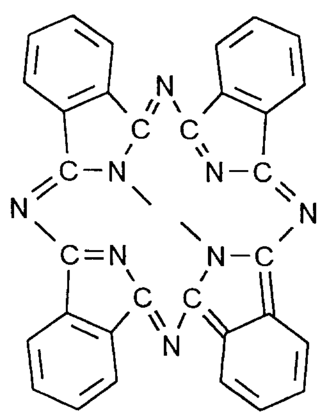

wobei die carbocyclischen Sechsringe zusätzlich mit Halogen, speziell Chlor, $C_1$-$C_6$-Alkyl, $C_1$-$C_6$-Alkoxy oder anderen, in der Aromatenchemie gebräuchlichen Substituenten, substituiert sein können. Die in (1) aufgeführten Substituenten $SO_3H$, $SO_2NR^1R^2$ und $SO_2BZ$ befinden sich bekanntermaßen vorzugsweise in der 3-Position.

Bevorzugt sind Farbstoffe der Formel (1) mit X = OH oder ein Rest der Formel (II), wobei die carbocyclischen Sechsringe des Pc-Gerüstes keine weiteren Substituenten aufweisen.

Bevorzugt sind weiterhin Farbstoffe der Formel (1), worin

B =

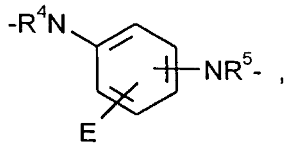

$-NR^4-(CH_2)_{2-6}-NR^5-$ ,

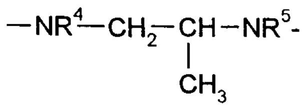 , 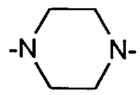 oder

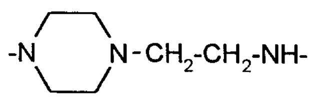 ,

worin

| | |
|---|---|
| $R^4$ und $R^5$ = | unabhängig voneinander H, $CH_3$, $C_2H_5$, $CH_2CH_2OH$, $CH_2CO_2H$ oder $CH_2CH_2CO_2H$ und |
| E = | H, $SO_3H$, $CO_2H$, $CH_3$, $C_2H_5$, $CH_3O$ bzw. $C_2H_5O$, und |
| Z = | ein faserreaktiver heterocyclischer Rest, insbesondere aus der Triazin-, Pyrimidin- oder Chinoxalin-Reihe, |

wobei den Substituenten und Indices a, b, c, $R^1$, $R^2$ und X die obengenannte Bedeutung zukommt.

Bevorzugt sind als faserreaktiver Rest Z Triazine, Pyrimidine und Chinoxaline, die als Substituenten nur Halogen bzw. Halogen und eine Aminogruppe aufweisen.

Bevorzugt sind weiterhin Farbstoffe (1), worin

-B-Z = Rest der folgenden Formeln (III), (IV) und (V)

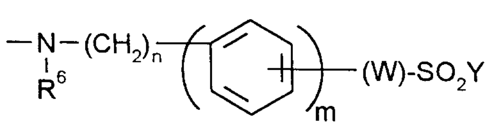 (III)

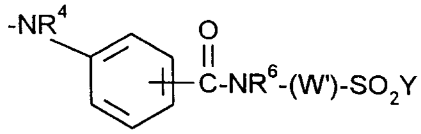

(IV)

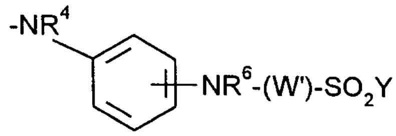

(V)

wobei

n, m, W und Y die Bedeutungen wie unter Formel (I) haben,

$R^4$ die obengenannte Bedeutung zukommt,

W' = $-(CH_2)_{2-3}-$, $-(CH_2)_2-O-(CH_2)_2-$ bzw. Phenylen,

$R^6$ = H, $CH_3$, $C_2H_5$, Phenyl, Sulfophenyl oder ein Rest der Formel (I) mit m = 0,

und den übrigen Substituenten und Indices a, b, c, $R^1$, $R^2$ und X die unter Formel (1) genannte Bedeutung zukommt.

Bevorzugt sind weiterhin solche Farbstoffe der Formel (1), worin dem faserreaktiven Rest Z folgende Bedeutung zukommt:

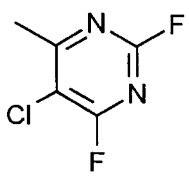
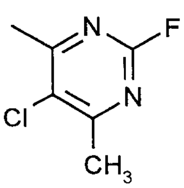
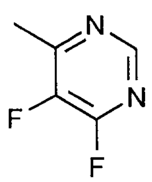
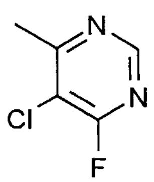

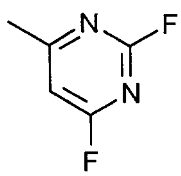
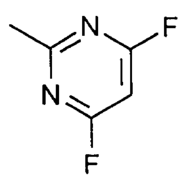
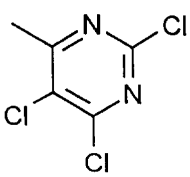
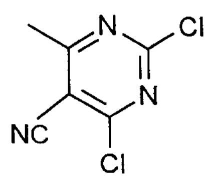

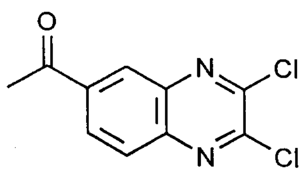

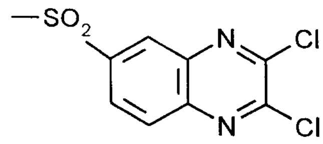

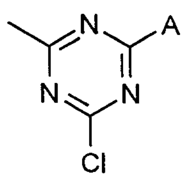

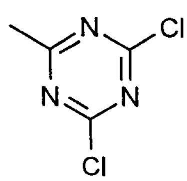

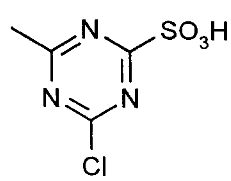

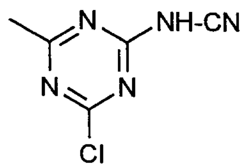

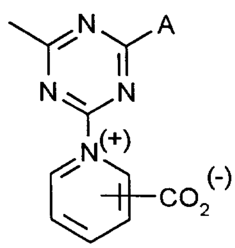

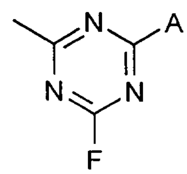

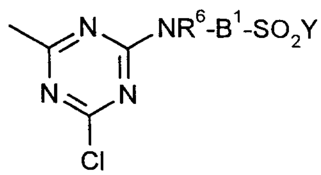

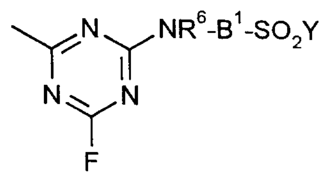

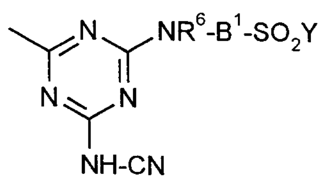

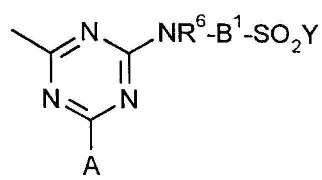

wobei A = $NH_2$, $NHR^7$, $NR^7R^8$, OH, $OR^7$, SH, $SR^7$, $SO_2R^7$,

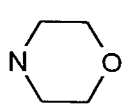 , 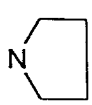 , 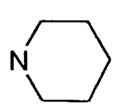 , 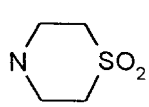 oder 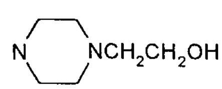

und

$R^7$, $R^8$ = unabhängig voneinander $C_1$-$C_6$-Alkyl, mit OH, $SO_3H$, $OSO_3H$, $CO_2H$ substituiertes $C_1$-$C_6$-Alkyl, Phenyl oder Naphthyl, mit OH, $SO_3H$, $CO_2H$ gegebenenfalls mehrfach substituiertes Phenyl oder Naphthyl und

$B^1$ = Alkylen, Phenylen, Naphthylen, speziell $-(CH_2)_2-$, $-(CH_2)_3-$, $-(CH_2)_2-O-(CH_2)_2-$,

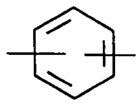 , 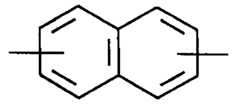 , 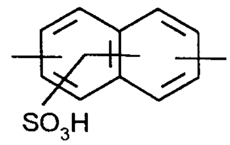

und $R^6$ und Y die bereits obengenannten Bedeutungen zukommen.

Bevorzugt sind weiterhin solche Farbstoffe der Formel (1), worin dem Brückenglied B die Bedeutung eines Restes der Formel (VI) zukommt,

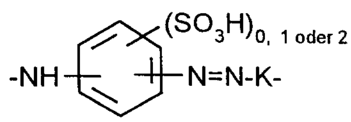 (VI)

wobei der faserreaktive Rest Z an K gebunden ist, und

K = Kupplungskomponente aus der Reihe der Pyrazolone, Pyridone, Naphthole, Aminonaphthole und Amino- und Diaminobenzole, speziell ein Pyridon der Struktur

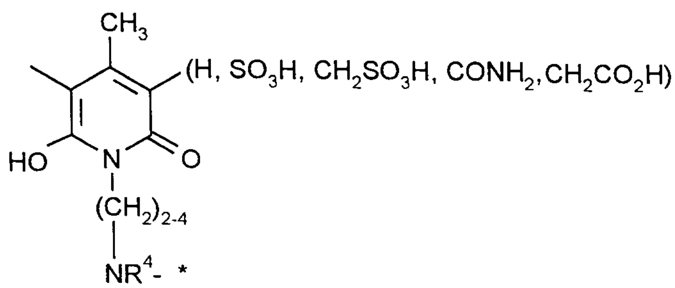

Der Stern markiert die Verknüpfungsstelle mit dem faserreaktiven Rest Z.

Besonders bevorzugt sind neue Reaktivfarbstoffe der Formeln (2) bis (7)

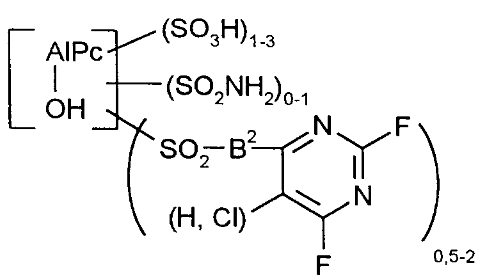 (2)

worin

$B^2$ =

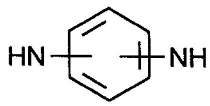 , 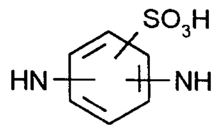 , 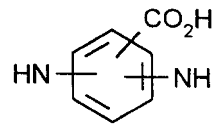 ,

$-NH-CH_2-CH_2-NH-$ ,

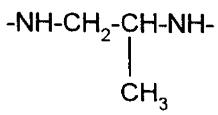 ,

$-NH-(CH_2)_3-NH-$ bzw.

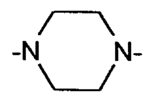

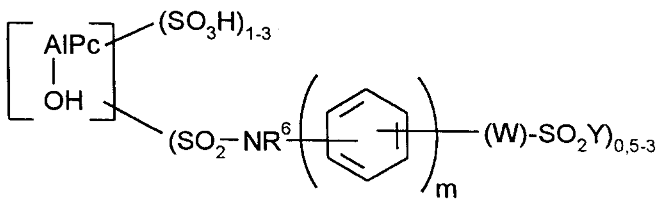

(3)

worin

$R^6$, Y und m die bereits obengenannte Bedeutung zukommt, speziell Farbstoffe der Formeln (3a), (3b) und (3c)

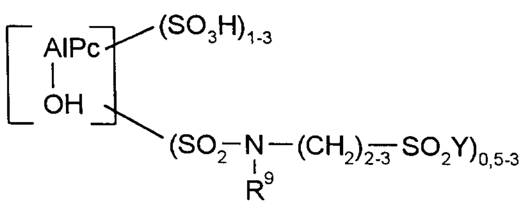

(3a)

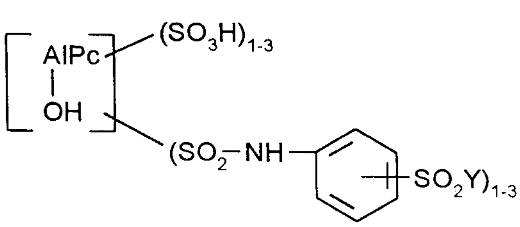

(3b)

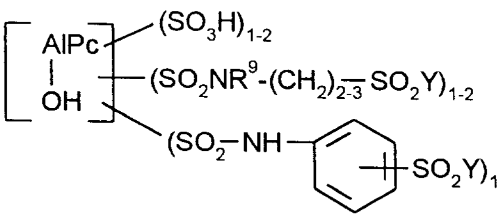

(3c)

worin $R^9$ = H, $CH_3$, $C_2H_5$, Phenyl, $-(CH_2)_{2-3}-SO_2Y$

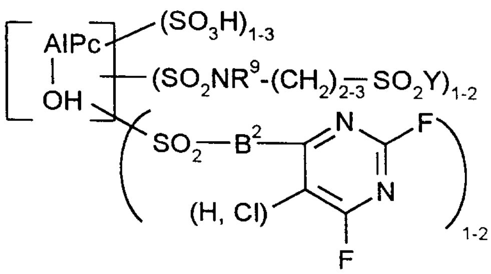

(4)

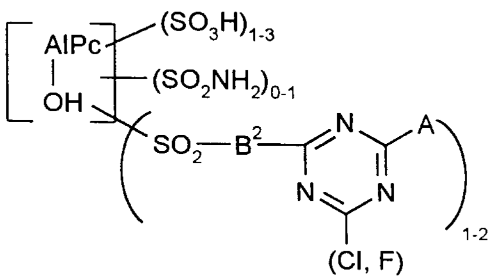

(5)

worin $B^2$ und A die obengenannte Bedeutung zukommt,

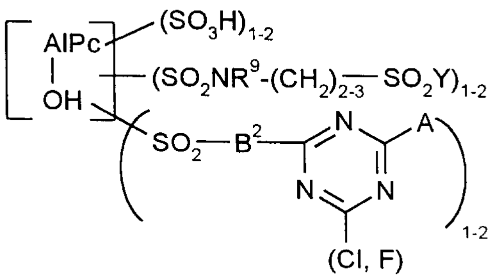

(6)

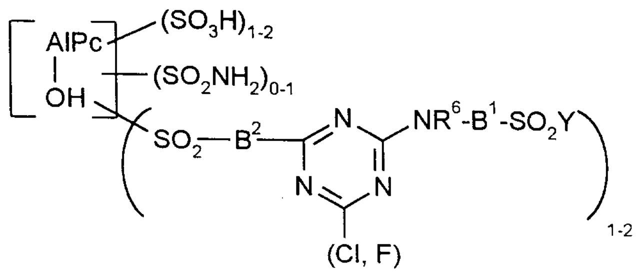

(7)

worin

$R^6$, $B^1$ und $B^2$ die bereits obengenannte Bedeutung zukommt.

Die angegebenen Formeln sind die der freien Säuren. Im allgemeinen werden die bei der üblichen Herstellung anfallenden Salze, insbesondere die Alkalisalze bzw. Ammoniumsalze eingesetzt.

Die Herstellung der Farbstoffe (1) erfolgt beispielsweise dadurch, daß man die aus EP-A 35 470, US-A 4 166 718 und EP-A 81 462 bekannten Al-Phthalocyaninsulfonsäurechloride der Formel (8)

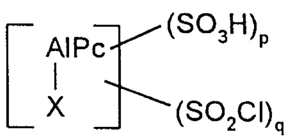

(8)

wobei

p = 0 bis 3 und

q = 1 bis 4, mit der Maßgabe, daß $p + q = 2, 3$ oder 4 ,

mit Aminen der Formel (9)

$$H\text{-}B\text{-}Z \qquad (9)$$

und gegebenenfalls mit Aminen der Formel (10)

$$HNR^1R^2 \qquad (10)$$

umsetzt und anschließend gegebenenfalls noch vorhandene Sulfonsäurechlorid-Gruppen verseift.

Wenn man Amine (9) und (10) einsetzt, können diese nacheinander oder gleichzeitig mit (8) umgesetzt werden.

Die Herstellung der neuen Reaktivfarbstoffe der Formel (1) erfolgt beispielsweise auch dadurch, daß man Farbstoffzwischenprodukte der Formel (11)

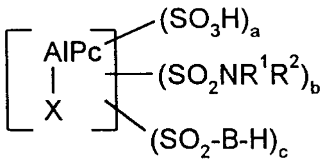

(11)

an einem weiteren N-Atom in B mit Triazin-, Pyrimidin- oder Chinoxalin-Reaktivkomponenten der Formel (12)

Z-Hal (12)

wobei Hal = Cl, Br, F
unter Abspaltung von Halogenwasserstoff kondensiert.

Verbindungen (11) sind erhältlich, indem man Säurechloride der Formel (8) mit Aminen (10) und/oder Diaminen H-B-H kondensiert, oder aber mit Aminen (10) und/oder Aminen H-B-Acyl (13), wobei eine Aminfunktion im Diamin H-B-H mit einer verseifbaren Acylgruppe [= Acyl (z.B. Formyl, Acetyl, Benzoyl usw.)] geschützt ist, kondensiert und anschließend die Acylaminogruppe hydrolysiert.

Die Herstellung von neuen Reaktivfarbstoffen der Formel (1) mit B = Rest der Formel (VI) erfolgt nach Methoden wie unter EP 611 259 A1 beschrieben.

Amine der Formel (9) lassen sich durch halbseitigen Umsatz der entsprechenden Diamine H-B-H mit Z-Hal herstellen.

Die Umsetzung der Al-Phthalocyanin-Sulfochloride der Formel (8) mit den Aminen der Formeln (9), (19) und (13) geschieht vorzugsweise in wäßriger Lösung bzw. Suspension bei Temperaturen von 0 bis 40°C und pH-Werten von 2 bis 10. Die Verseifung der Acylaminogruppe in Verbindungen der Formel (14)

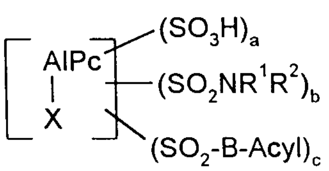

(14)

die nach Umsatz von (8) mit (13) resultieren, kann sowohl im sauren als auch im alkalischen Medium vorzugsweise bei Temperaturen von 70 bis 80°C durchgeführt werden.

Der Umsatz von Farbstoffen der Formel (11) mit Z-Hal (12) wird vorzugsweise in wäßriger Lösung bzw. Suspension bei pH 4 bis 9 und 0 bis 60°C durchgeführt.

Die neuen Farbstoffe eignen sich hervorragend zum Färben und Bedrucken hydroxyl- und amidgruppenhaltiger Textilmaterialien, beispielsweise solchen aus Cellulose, Wolle oder synthetischen Polyamiden. Ihre Anwendung erfolgt nach üblichen Methoden.

Die Färbungen und Drucke besitzen ein hervorragendes Echtheitsniveau.

Die neuen Reaktivfarbstoffe können sowohl als Pulver, Granulat oder als wäßrige konzentrierte Lösungen eingesetzt werden. Erfindungsgemäß sind weiterhin Textilprodukte, enthaltend mit Farbstoffen der Formel (1) gefärbte hydroxyl- oder amidgruppenhaltige Materialien.

In einer bevorzugten Ausführungsform werden die Farbstoffe als Granulate verwendet. Die Granulate der Farbstoffe können in folgenden Schritten erhalten werden:

Mischgranulierung

Dabei wird das Farbstoffpulver mit 15 bis 55 % Wasser - bezogen auf das Gemisch des Pulvers - befeuchtet, anschließend in einem Mischgranulator das Gemisch geformt und dann getrocknet und entstaubt, wobei das Entstaubungsmittel als Aerosolgemisch auf das Granulat gesprüht wird.

Sprühgranulierung

Dabei wird die Syntheselösung oder -suspension in einem fluidisierenden Sprühtrockner gleichzeitig getrocknet und granuliert.

Farbstoffpulver oder Farbstoffgranulate enthalten im allgemeinen (in Gew.-%) 30 bis 80 % eines Reaktivfarbstoffes

der Formel (1), 5 bis 15 % Wasser, jeweils bezogen auf die Gesamtzusammensetzung. Daneben können sie noch anorganische Salze wie Alkalichloride oder Alkalisulfate, Dispergiermittel und Entstaubungsmittel enthalten.

Bevorzugte Feststoffmischungen enthalten zusätzlich Puffersubstanzen, die beim Auflösen in der 20-fachen Menge Wasser (bezogen auf das Gewicht der Farbstoffformierung) einen pH-Wert von 3,5 bis 7,5, insbesondere 4,5 bis 6,5 geben. Diese Puffermischungen werden in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 % eines Farbstoffs der Formel (1) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5 auf. Diese Puffersubstanzen werden vorzugsweise in Mengen von 0,1 bis 50 %, insbesondere 1 bis 20 Gew.-%, bezogen auf das Gesamtgewicht, zugesetzt.

Die verwendeten Puffer sind inert gegenüber den Reaktivgruppen. Beispiele für Puffer sind: Natriumdihydrogenphosphat, Dinatriumhydrogenphosphat, Kaliumdihydrogenphosphat, Dikaliumhydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die erfindungsgemäßen Farbstoffe eignen sich insbesondere zum Färben von Textilprodukten, speziell zum Färben von hydroxyl- oder amidgruppenhaltigen Materialien.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf Jute und Ramifasern; regenerierte Cellulosefasern sind beispielsweise Zellwolle und Viskosekunstseide. Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten. Man färbt bevorzugt im wäßrigen Bad bei Temperaturen zwischen 60 und 105°C, gegebenenfalls bei Temperaturen bis zu 120°C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden. Die Farbstoffe zeichnen sich durch ein harmonischeres Verhalten im Aufziehen durch das Neutralsalz und die anschließende Zugabe des säurebindenden Mittels aus.

Nach dem Klotzverfahren werden auf Cellulosefasern ebenfalls ausgezeichnete Farbausbeuten bei sehr gutem Warenbild aufgrund der gegenüber reinen Vinylsulfon-Farbstoffe besseren Löslichkeit erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulossefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte mit anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumhydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser

gebunden; sie zeichnen sich auf diesen Fasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Verbindungen hergestellten Färbungen und Drucke zeichnen sich durch sehr klare Nuancen aus. Insbesondere besitzen die Färbungen und Drucke auf Cellulosefasermaterialien eine gute Lichtechtheit und sehr gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit.

Desweiteren können die erfindungsgemäßen Verbindungen auch für das faserreaktive Färben von Wolle Verwendung finden. Auch läßt sich filzfrei oder filzarm ausgerüstete Wolle (vgl. beispielsweise H. Rath, Lehrbuch der Textilchemie, Springer-Verlag, 3. Auflage (1972), S. 295 bis 299, insbesondere die Ausrüstung nach dem sogenannten Hercosett-Verfahren (S. 298); J. Soc. Dyers and Colourists 1972, 93 bis 99, und 1975, 33 bis 44) mit sehr guten Echtheitseigenschaften färben.

Das Verfahren des Färbens auf Wolle erfolgt hierbei in üblicher und bekannter Färbeweise aus saurem Milieu. So wird beispielsweise dem Färbebad Essigsäure und/oder Ammoniumsulfat oder Essigsäure und Ammoniumacetat oder Natriumacetat zugefügt, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise zunächst aus saurem Färbebad mit einem pH von etwa 3,5 bis 5,5 unter Kontrolle des pH-Wertes per Ausziehprozeß gefärbt und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung mit der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der Verbindungen sehr gut ist, lassen sie sich auch mit dem Vorteil bei üblichen kontinuierlichen Färbeverfahren einsetzen.

Die angegebenen Formeln sind die der entsprechenden freien Säuren. Die Farbstoffe wurden im allgemeinen in Form von Alkalisalzen, insbesondere der Na-Salze isoliert und zum Färben eingesetzt.

**Beispiel 1**

115 g Chloraluminiumphthalocyanin wurden bei Raumtemperatur und unter Rühren in 600 ml Chlorsulfonsäure innerhalb von 30 Minuten eingetragen. Anschließend wurde 8 Stunden bei 136 bis 138°C gerührt und die abgekühlte Schmelze auf Eis ausgetragen. Die Suspension wurde abgesaugt und mit Eiswasser weitgehend sulfat- und säurefrei gewaschen. Die isolierte feuchte Paste entsprach in Form der freien Säure im wesentlichen der Formel

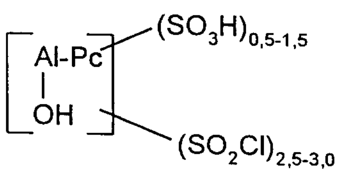

Das Nutschgut wurde mit Eiswasser versetzt, anschließend rührte man 11 g Ammoniumchlorid und 95 g 2,4-Difluor-6-(-3-aminophenyl)aminopyrimidin ein. Durch Zugabe von Natronlauge wurde der pH-Wert der Suspension bzw. Lösung in 2 Stunden auf 9,8 bis 10,0 gestellt, wobei gleichzeitig die Temperatur auf 25°C erhöht wurde. Nach weiteren 8 Stunden Rühren bei dieser Temperatur wurde die Reaktionslösung mit verdünnter Salzsäure auf pH 7 gestellt und mit Natriumchlorid ausgesalzen. Der Farbstoff wurde abgenutscht und bei 60°C im Vakuum getrocknet. Der Farbstoff entsprach in Form seiner freien Säure im wesentlichen der Formel

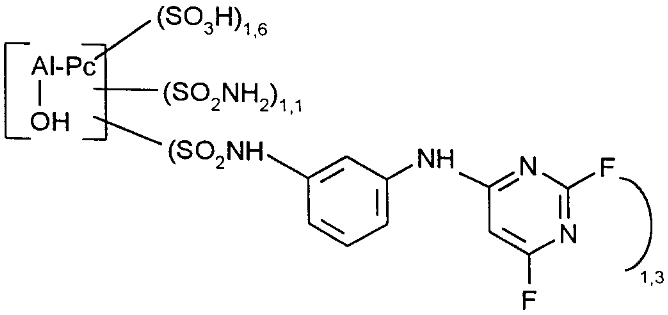

und färbte Baumwolle in klaren grünstichig türkisblauen Tönen, bzw. ergab auf Baumwolle einen grünstichig türkisblauen Druck.

**Beispiel 2**

Es wurde wie in Beispiel 1 verfahren, aber unter Verzicht auf die Zugabe von Ammoniumchlorid. Es resultierte ein Farbstoff der Formel

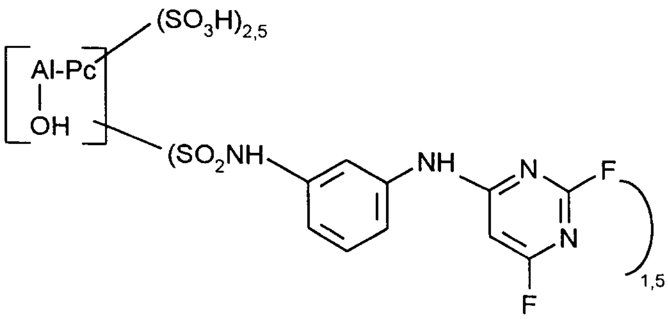

der Baumwolle ebenfalls in klaren grünstichig türkisblauen Farbtönen färbte.

Der Sulfiergrad und der Anteil an Sulfonamidgruppen im Farbstoff von Beispiel 1 und 2 läßt sich durch geringfügige Variation der Sulfochlorierungsbedingungen oder durch Variation der Einsatzmengen der Aminoverbindungen in bekannter Weise steuern.

**Beispiel 3**

Die Reaktivfarbstoffe der Beispiele 1 und 2 wurden auch hergestellt durch Umsetzung von 0,1 mol eins Farbstoffzwischenprodukt der Formel

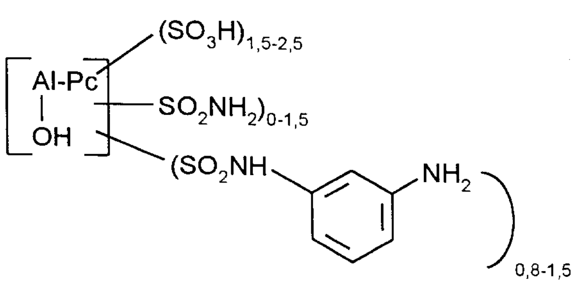

bei 40 bis 50°C mit 0,08 bis 0,15 mol 2,4,6-Trifluorpyrimidin in 250 ml Wasser.

Das eingesetzte Farbstoffzwischenprodukt mit obiger Struktur erhielt man durch Kondensation des Aluminiumphthalocyanin-sulfbchlorids mit 1,3-Diaminobenzol und gegebenenfalls ausgewählter Mengen Ammoniumchlorid.

**Beispiele 4 bis 19**

Durch Variation der Diamino-Verbindung, des Amins und/oder des jeweiligen Reaktivsystems wurden in Analogie zu den Beispielen 1 bis 3 die folgenden neuen interessanten türkisblauen Reaktivfarbstoffe hergestellt:

Beispiel 4:

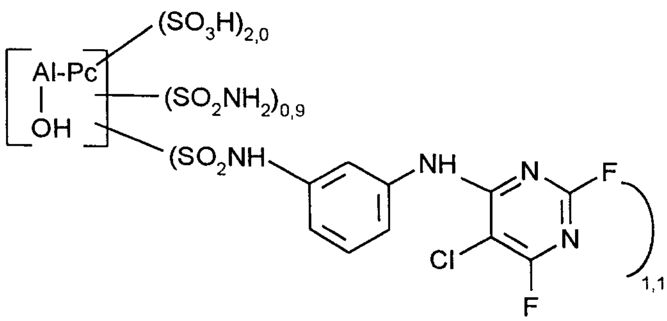

Beispiel 5:

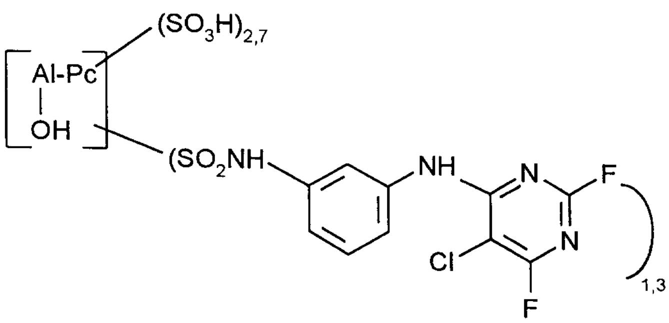

Beispiel 6:

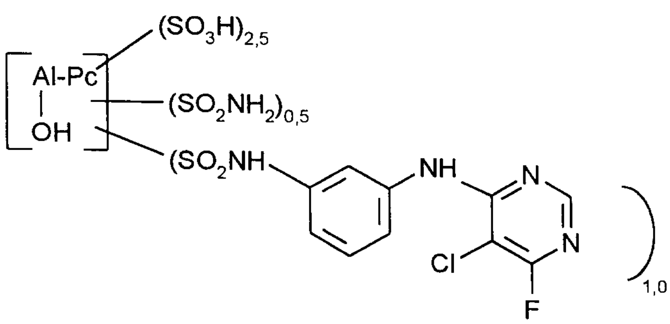

Beispiel 7:

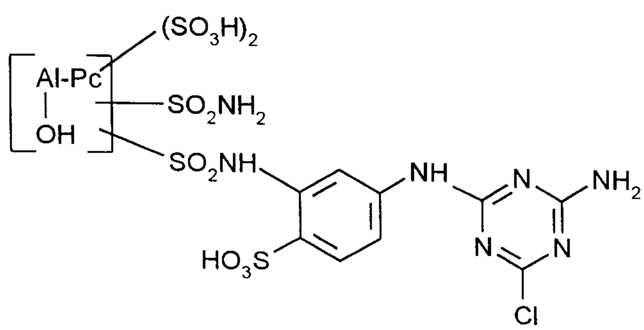

Beispiel 8:

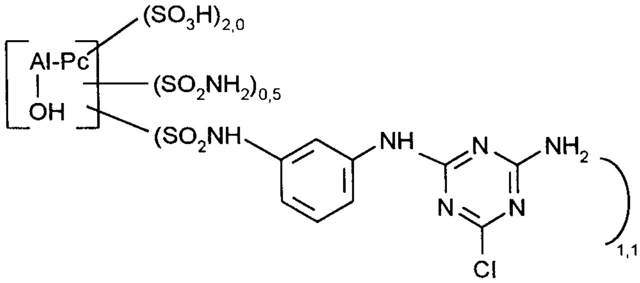

Beispiel 9:

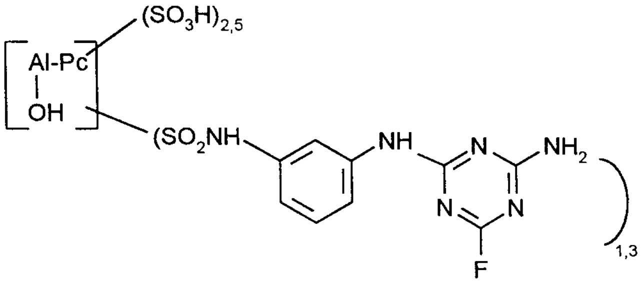

Beispiel 10:

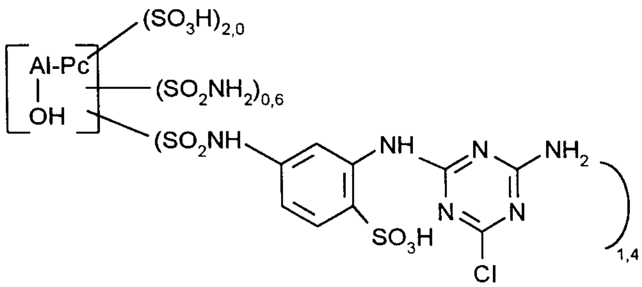

Beispiel 11:

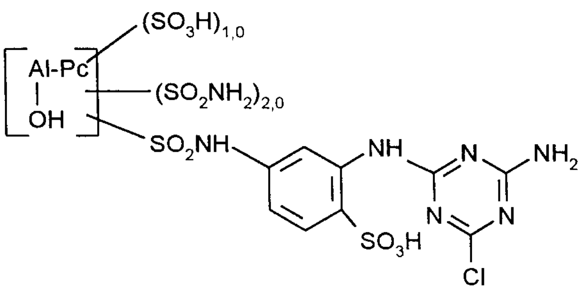

Beispiel 12:

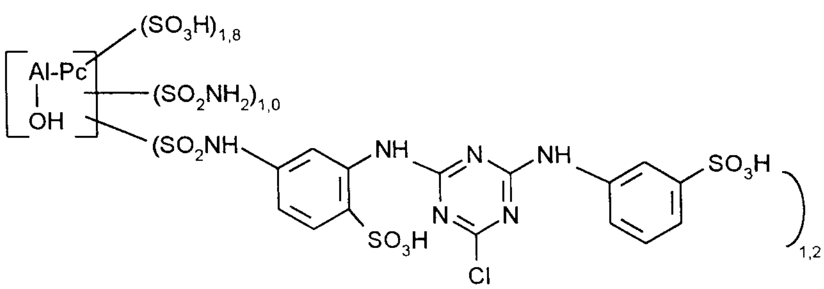

Beispiel 13:

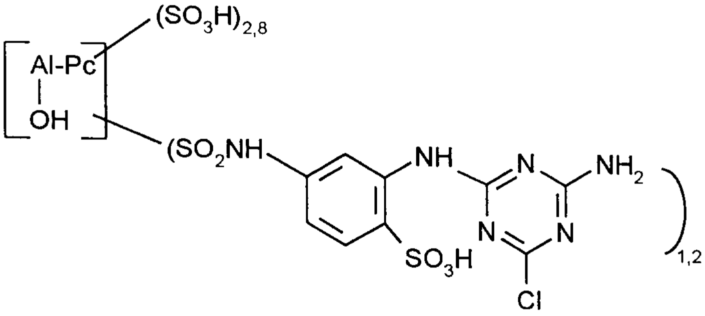

Beispiel 14:

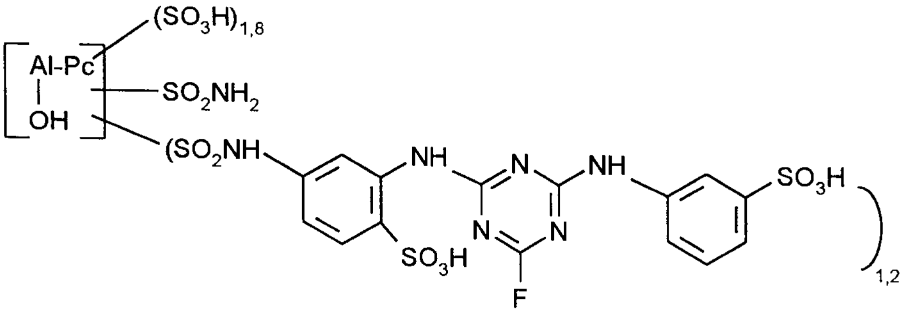

Beispiel 15:

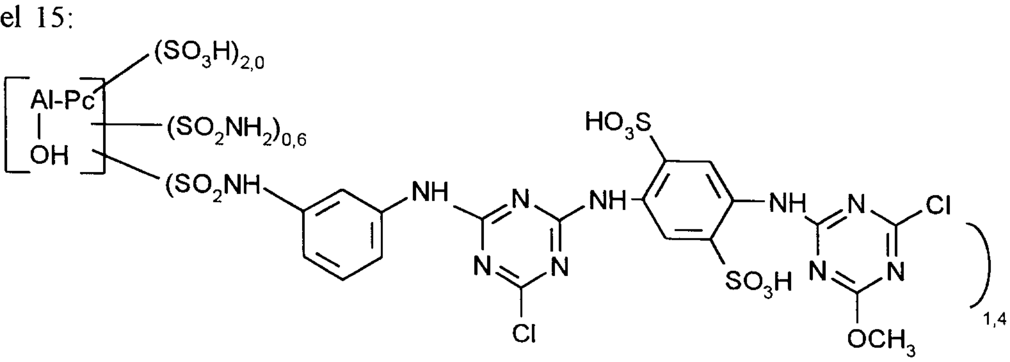

Beispiel 16:

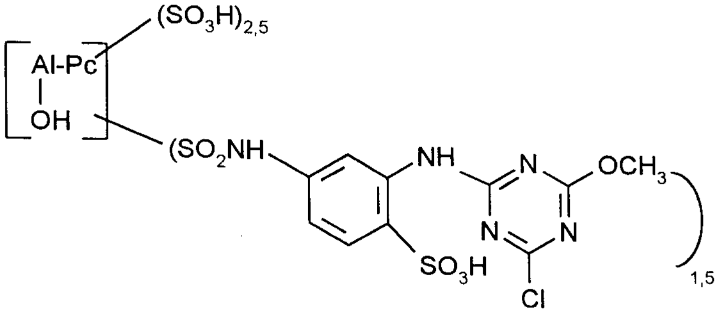

Beispiel 17:

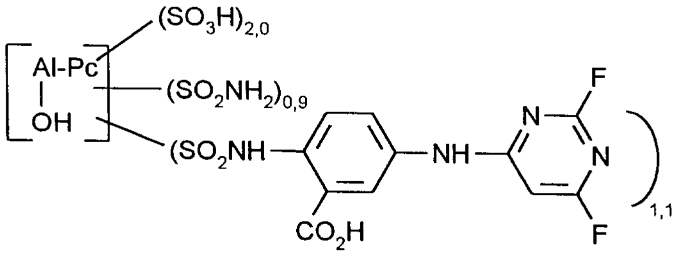

Beispiel 18:

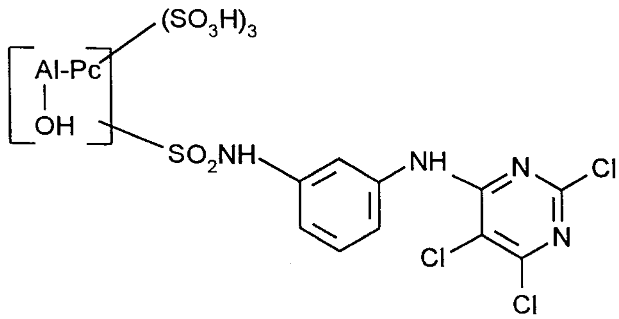

Beispiel 19:

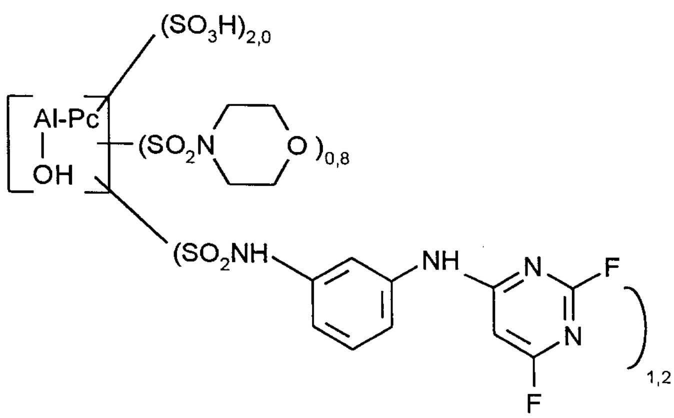

**<u>Beispiel 20 bis 30</u>**

Durch Einsatz von aliphatischen Diaminoverbindungen anstelle der aromatischen in Analogie zu Beispiel 1 bis 3 resultierten folgende wichtige neue türkisblaue Reaktivfarbstoffe:

Beispiel 20:

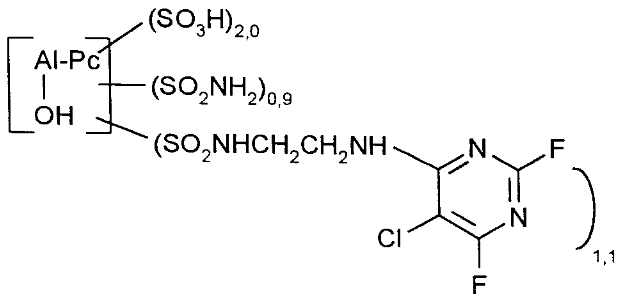

Beispiel 21:

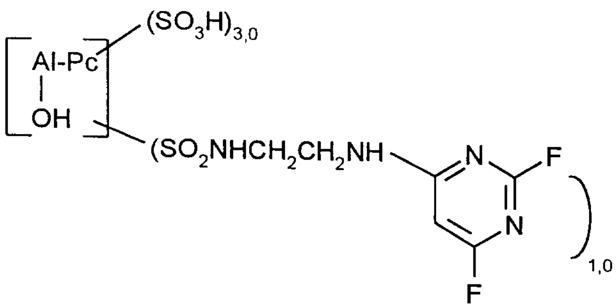

Beispiel 22:

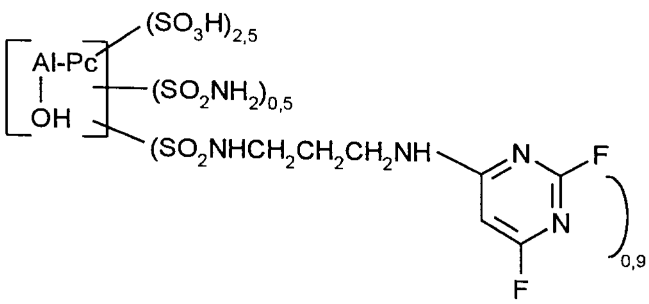

Beispiel 23:

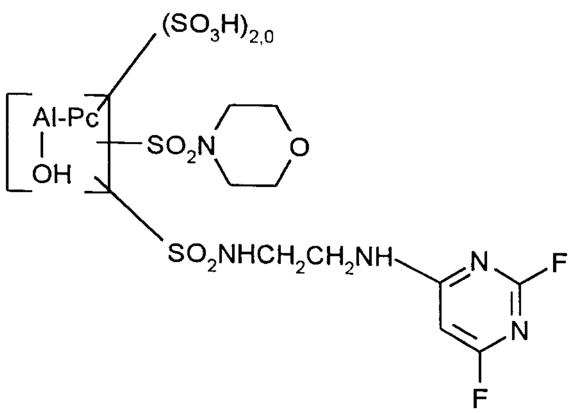

Beispiel 24:

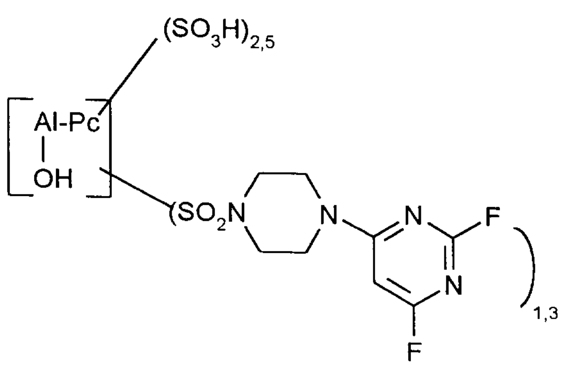

Beispiel 25:

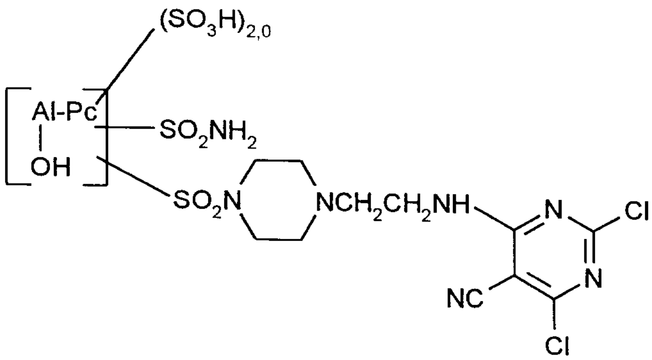

Beispiel 26:

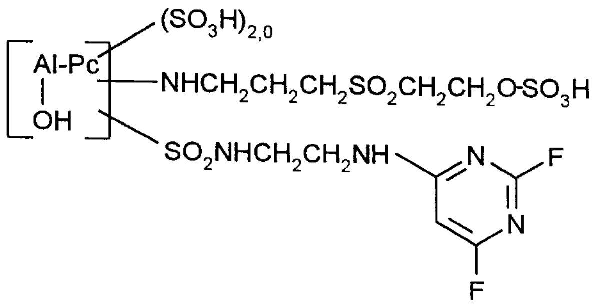

Beispiel 27:

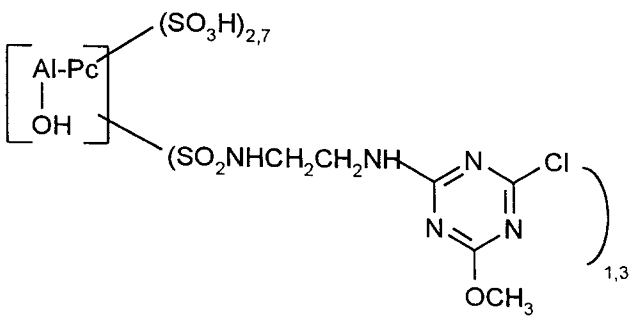

Beispiel 28:

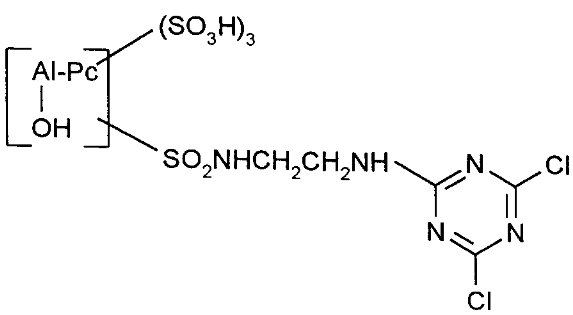

Beispiel 29:

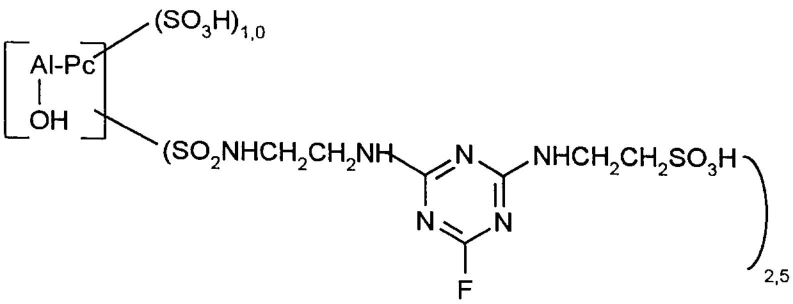

Beispiel 30:

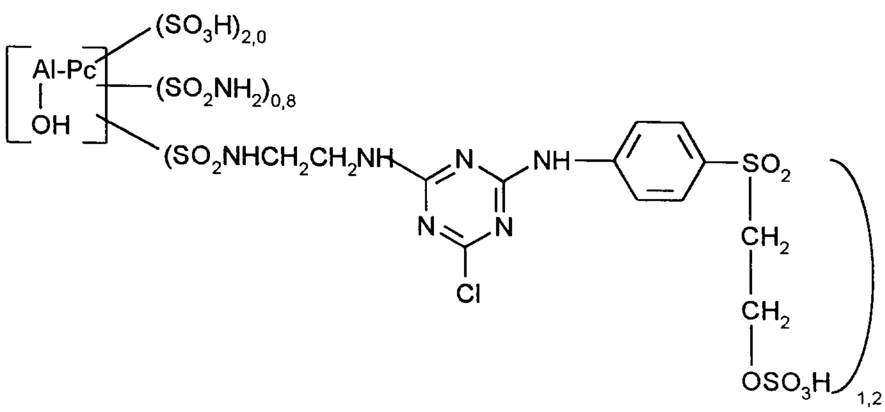

## Beispiel 31

Das nach Beispiel 1 aus 115 g Chloraluminiumphthalocyanin hergestellte Hydroxyaluminiumphthalocyaninsulfochlorid wurde in 1 l Eiswasser und 2 ml Pyridin verrührt. Dazu dosierte man eine neutrale Lösung von 281 g 4-(β-Sulfatoethylsulfonyl)anilin in Wasser und hielt durch gleichzeitige Zugabe von festem Natriumhydrogencarbonat den pH-Wert konstant bei 5,8 bis 6,0. Man erwärmte anschließend innerhalb von 10 Stunden von 0°C auf 25°C. Man erhielt ca. 450 g grünblaues Pulver der Struktur

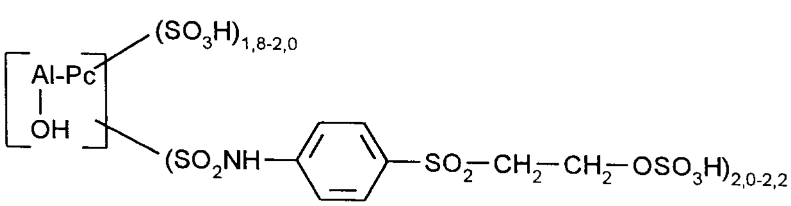

das Baumwolle und Wolle in brillanten grünstichig türkisblauem Ton färbte.

Durch Änderung der Einsatzmenge an 4-(β-Sulfatethylsulfonyl)anilin ist das Verhältnis zwischen Sulfonsäuregruppen und Sulfonamidgruppen einfach zu variieren.

## Beispiel 32 bis 39

Durch Variation der Sulfatoethylsulfonyl-haltigen Aminkomponente in Beispiel 31 wurden folgende wichtige türkisblauen Reaktivfarbstoffe dargestellt:

Beispiel 32:

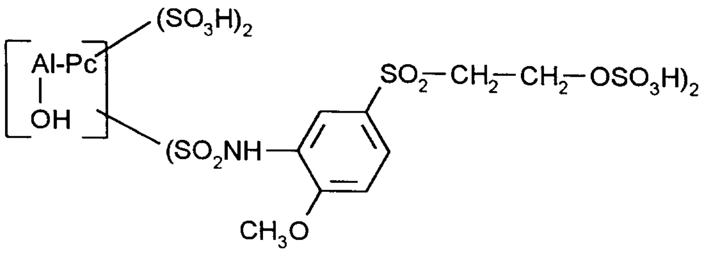

Beispiel 33:

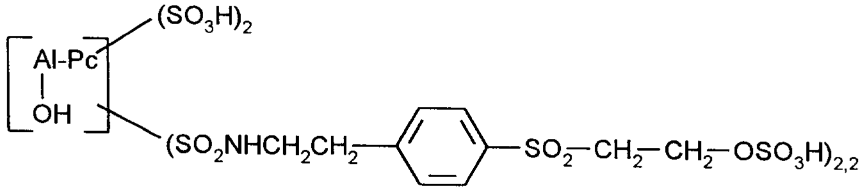

Beispiel 34:

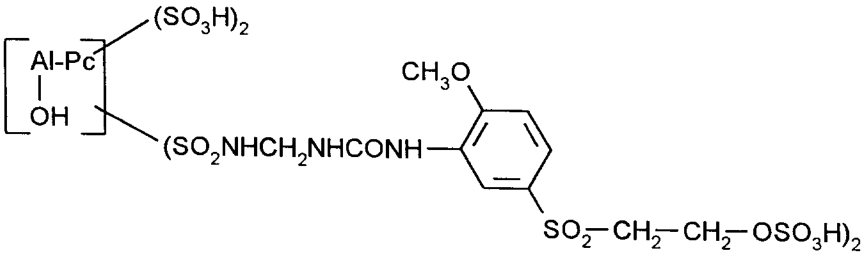

Beispiel 35:

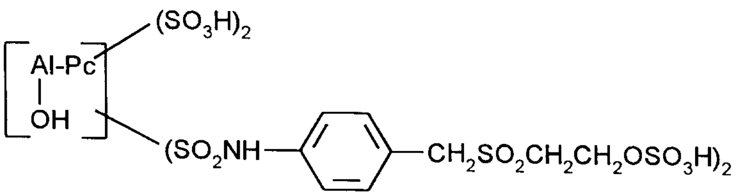

Beispiel 36:

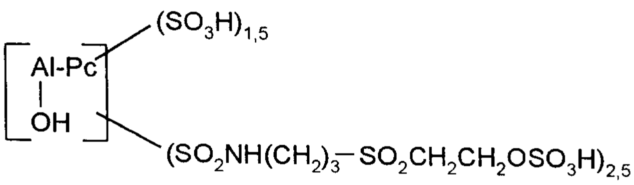

Beispiel 37:

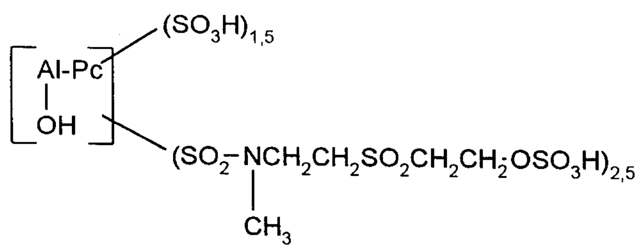

Beispiel 38:

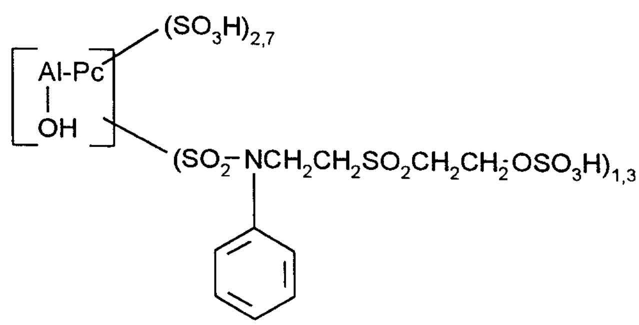

Beispiel 39:

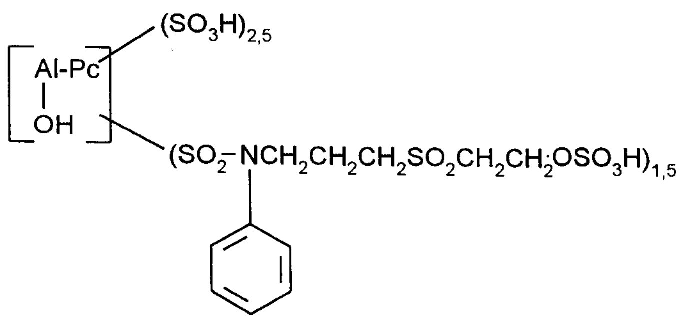

**Beispiel 40**

Das nach Beispiel 1 aus 115 g Chloraluminiumphthalocyanin hergestellte Hydroxyaluminium-phthalocyaninsulfochlorid wurde in 1 l Wasser und 2 ml Pyridin verrührt. Dazu dosierte man 52 g N-Methyl-2-(β-sulfoethylsulfonyl)ethylamin und 169 g 4-(β-sulfatoethylsulfonyl)anilin in Wasser und hielt durch Zugabe einer 20%igen Kaliumhydrogencarbonatlösung den pH-Wert konstant bei 6,5 bis 6,7. Innerhalb von 6 bis 8 Stunden erwärmte man auf 25°C und fügt danach zur Reaktionslösung solange Kaliumchlorid zu, bis der Farbstoff vollständig ausgefallen war. Der Farbstoff färbte Baumwolle nach verschiedenen Applikationsmethoden in klaren türkisblauem Farbton. Ebenso sind auf Baumwolle oder Viskose brillante türkisfarbene Drucke möglich. Der Farbstoff besitzt die Struktur

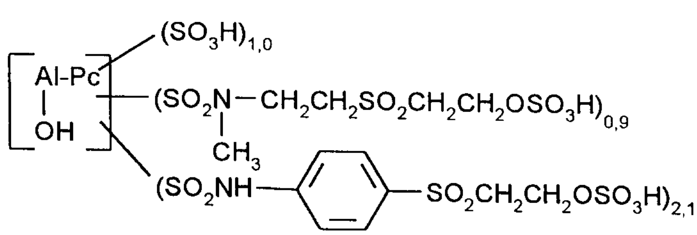

Setzte man anstelle von N-Methyl-2-(β-sulfatoethylsulfonyl)ethylamin entsprechende Menge eines anderen beliebigen Amins ein, so erhielt man folgende interessante türkisblaue Farbstoffe:

Beispiel 41:

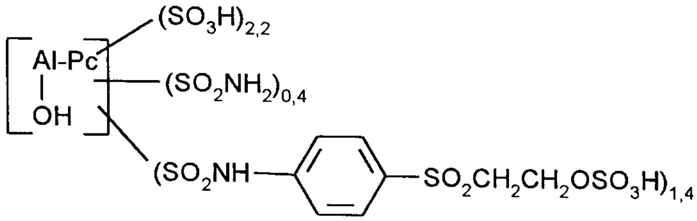

Beispiel 42:

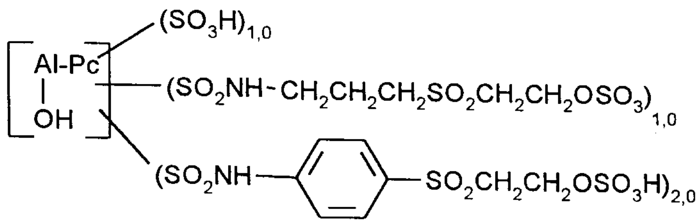

Beispiel 43:

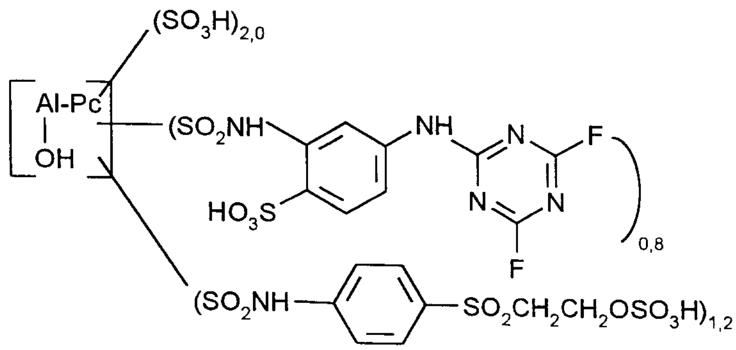

Beispiel 44:

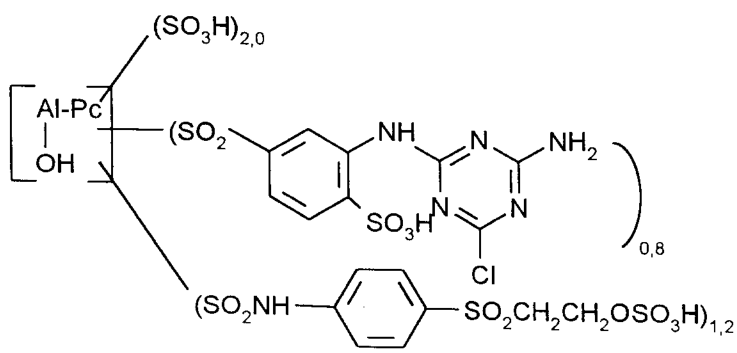

Variierte man in Vorschrift von Beispiel 40 beide Aminkomponenten, so resultierten folgende bifunktionellen türkisfarbenen Reaktivfarbstoffe:

Beispiel 45:

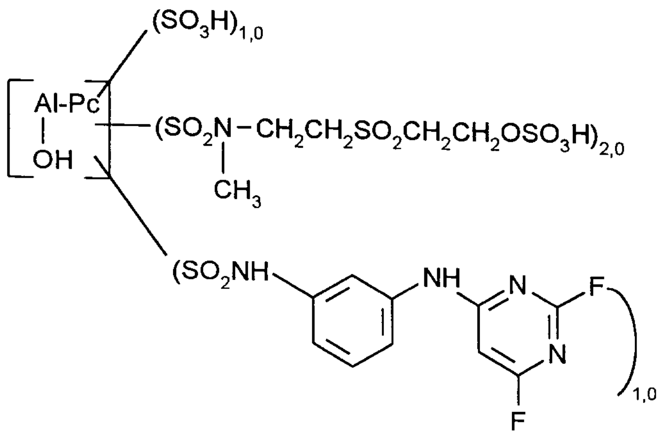

Beispiel 46:

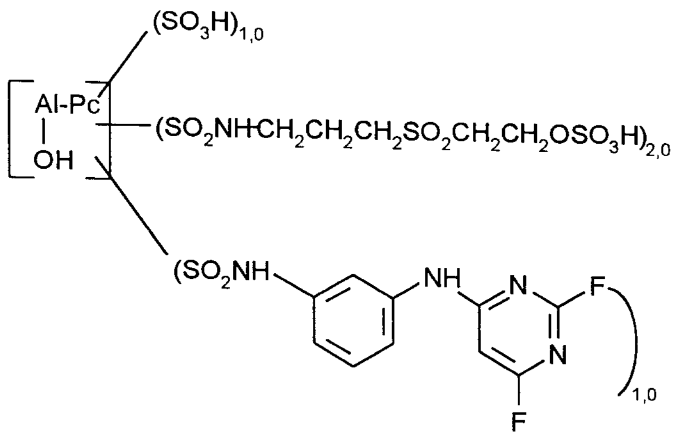

Beispiel 47:

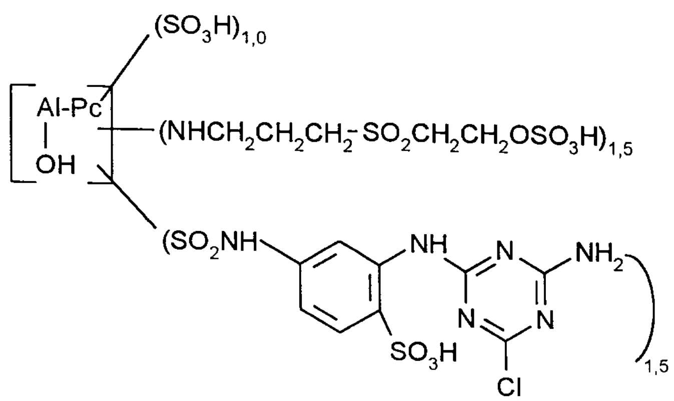

Beispiel 48:

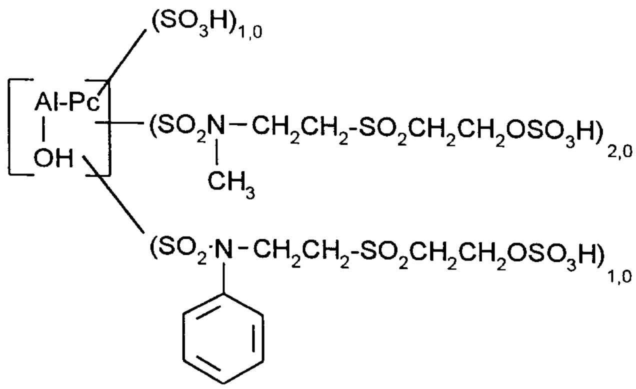

**Beispiel 49**

0,025 mol der Farbbase der Struktur

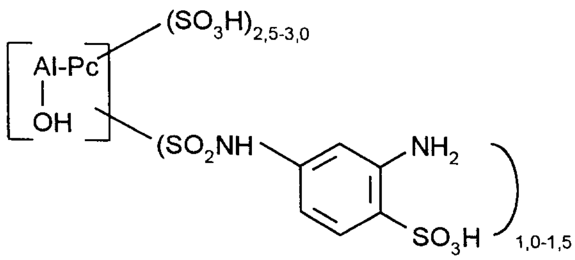

die nach bekannten Methoden durch Sulfochlorierung von Chloraluminiumphthalocyanin und anschließender Umsetzung mit 1,3-Diaminobenzol-4-sulfonsäure hergestellt wurde, wurden in 150 ml Wasser mit 0,026 mol Natriumnitrit verrührt. Die auf 0 bis 2°C abgekühlte Lösung tropfte man in eine Mischung aus 100 g Eis/Wasser und 12 g 30%iger Salzsäure. Die resultierende Diazoniumsalzsuspension ließ man bei 0 bis 5°C in eine Lösung bestehend aus 300 g Eis/Wasser und 0,025 mol 1-(3-Methylaminopropyl)-2-hydroxy-4-methyl-pyridon-(2) fließen. Gleichzeitig steuerte man den pH-Wert durch Zusatz von 20%iger Natronlauge bei 9,0 bis 9,5. Die resultierende grüne Lösung wurde mit 2,4,6-Trifluorpyrimidin zum Farbstoff der Struktur

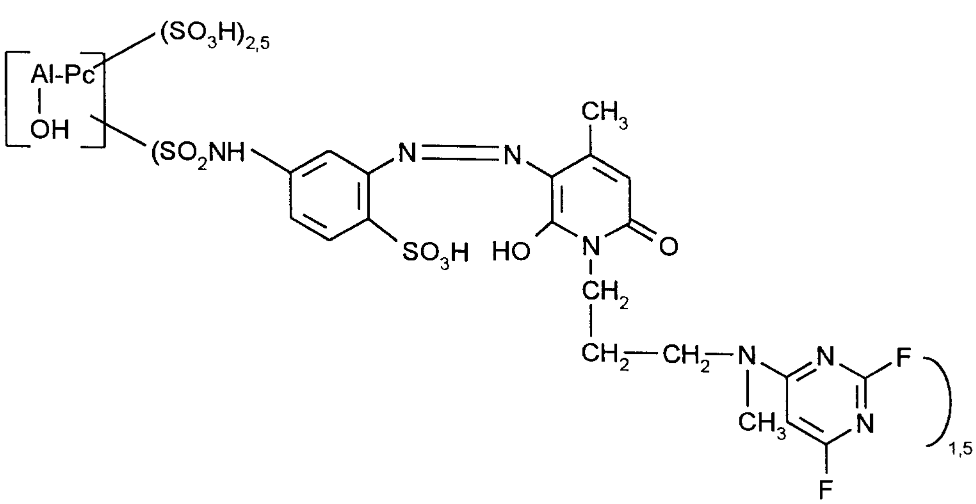

nach gängigen Verfahren (analog zu Beispiel 3) umgesetzt. Der Farbstoff färbte Cellulosematerial in brillanten grünen Farbtönen.

Durch Variation der Kupplungskomponente waren weitere wichtige Grünfarbstoffe zugänglich:

Beispiel 50:

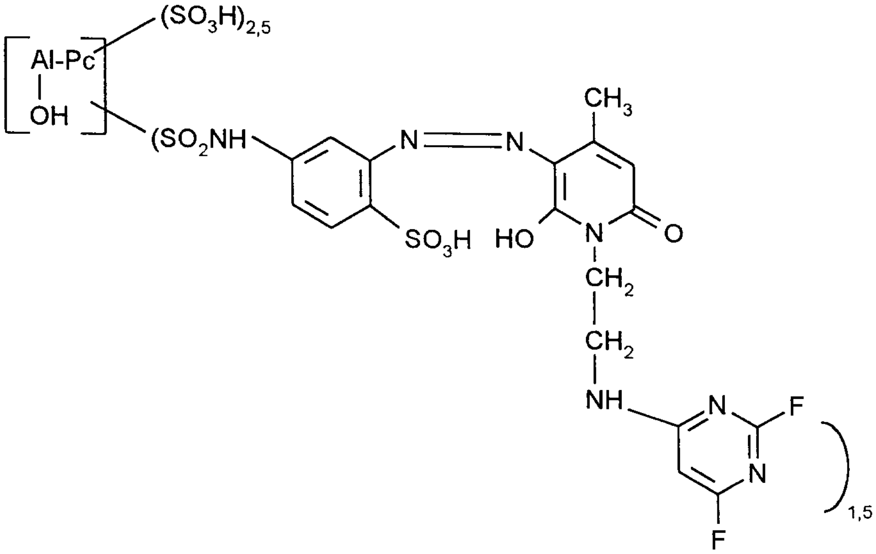

Beispiel 51:

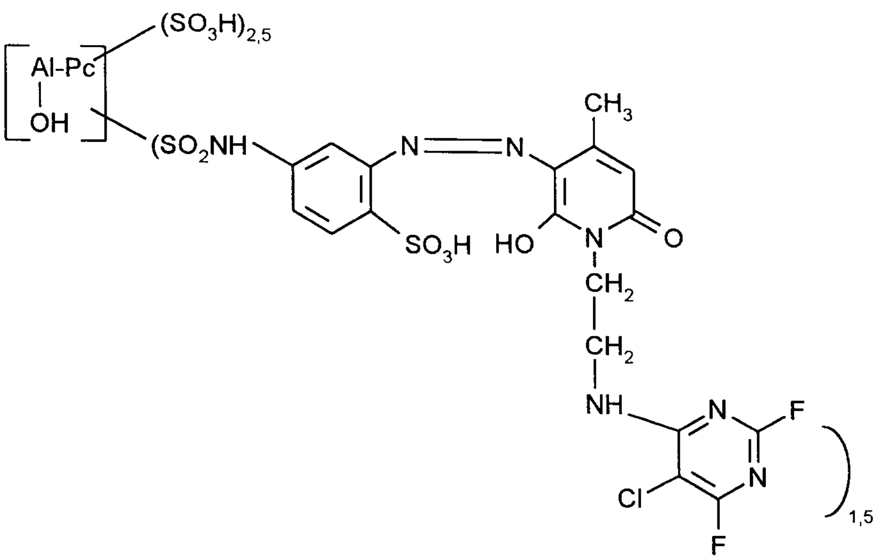

Beispiel 52:

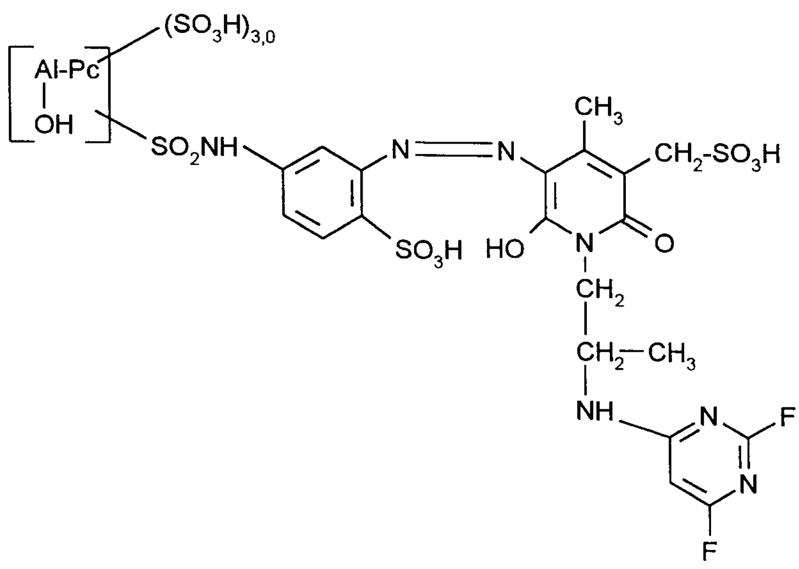

**Beispiel 53**

Wählte man in Beispiel 49 als Kupplungskomponente ein β-sulfatoethylsulfönylhaltiges Pyrazolon, so entfiel die abschließende Kondensation mit Halogenpyrimidinen, und man erhielt so direkt einen brillanten grünen Reaktivfarbstoff

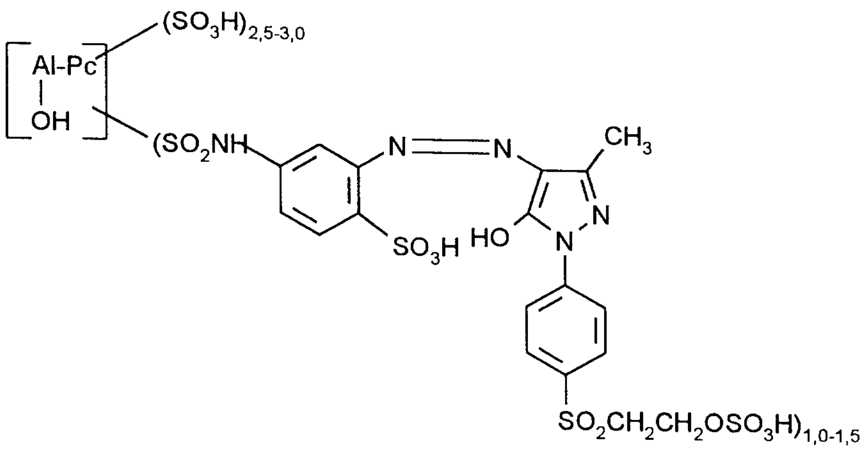

Zusammenfassung der $\lambda_{max}$-Werte, gemessen in Wasser als Lösungsmittel:

| Beispiel | $\lambda_{max}$ |
|---|---|
| 1 | 609, 677 nm |
| 2 | 609, 677 nm |
| 6 | 609, 678 nm |
| 9 | 642, 674 nm |
| 31 | 608, 679 nm |
| 36 | 609, 678 nm |
| 37 | 609, 678 nm |
| 38 | 612, 680 nm |
| 45 | 610 (sh), 677 nm |

## Patentansprüche

1. Aluminiumphthalocyaninreaktivfarbstoffe, die in Form der freien Säure folgender Struktur entsprechen

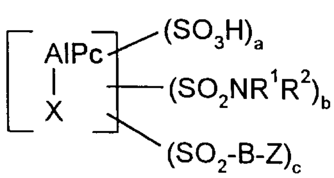

(1)

worin

a = eine Zahl von 0 bis 3,

b = eine Zahl von 0 bis 2,

c = eine Zahl von 0,5 bis 3,

Pc = Phthalocyanin-Rest,

$R^1$ und $R^2$ = unabhängig voneinander H, $C_1$-$C_6$-Alkyl, substituiertes $C_1$-$C_6$-Alkyl, Phenyl, substituiertes Phenyl, oder ein faserreaktiver Rest mit einer Sulfonylgruppe oder $NR^1R^2$ zusammen den Rest eines gesättigten heterocyclischen Ringsystems,

B = N-haltiges Brückenglied, das über ein N-Atom mit dem $SO_2$-Rest verknüpft ist,

Z = faserreaktiver Rest,

X = OH, $OR^3$, ein über ein Bindeglied verknüpfter Phthalocyaninrest oder ein Anion und

$R^3$ = $C_1$-$C_6$-Alkyl, substituiertes $C_1$-$C_6$-Alkyl, Phenyl oder substituiertes Phenyl.

**2.** Reaktivfarbstoff gemäß Anspruch 1, dadurch gekennzeichnet, daß die Summe aus a + b + c nicht kleiner als 2 und nicht größer als 4 ist.

**3.** Reaktivfarbstoff gemäß wenigstens einem der vorhergehenden Ansprüche, dadurch gekennzeichnet, daß $R^1$ und $R^2$ unabhängig voneinander H, $C_1$-$C_6$-Alkyl, mit OH, $SO_3H$, $CO_2H$ oder $OSO_3H$ substituiertes $C_1$-$C_6$-Alkyl, Phenyl oder mit OH, $SO_3H$, $CO_2H$ substituiertes Phenyl bedeuten.

**4.** Reaktivfarbstoff gemäß wenigstens einem der vorhergehenden Ansprüche, dadurch gekennzeichnet, daß $R^1$ und/oder $R^2$ einen Rest folgender Struktur bedeuten

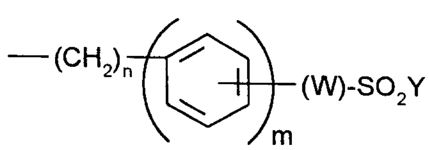

(I)

worin

n = 0 bis 3,

m = 0 oder 1
aber n + m = 1, 2, 3 oder 4

W = $-(CH_2)_{1\text{-}6}$, $-(CH_2)_2$-O-$(CH_2)_2$- oder direkte Bindung,

Y = $CH{=}CH_2$, $CH_2CH_2Cl$, $CH_2CH_2OH$ oder $CH_2CH_2OSO_3H$ bedeuten.

**5.** Reaktivfarbstoff gemäß wenigstens einem der vorhergehenden Ansprüche, dadurch gekennzeichnet, daß die Gruppe $NR^1R^2$

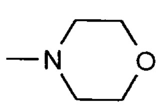 ; 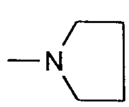 ; 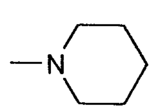 ;

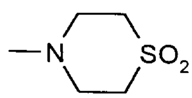 oder 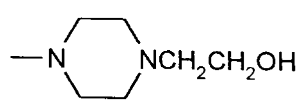

bedeutet.

**6.** Reaktivfarbstoffe gemäß wenigstens einem der vorhergehenden Ansprüche, dadurch gekennzeichnet, daß X einen Rest der Formel OH, $OR^3$ oder

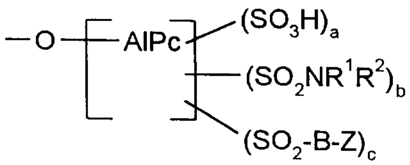

(II)

bedeutet, wobei die Substituenten $R^1$ und $R^2$, B und Z und die Indices a, b und c eine der hierzu in Anspruch 1 angegebene Bedeutung haben.

**7.** Reaktivfarbstoffe gemäß wenigstens einem der vorhergehenden Ansprüche, dadurch gekennzeichnet, daß

B =

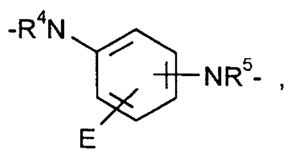

$-NR^4-(CH_2)_{2-6}-NR^5-$ ,

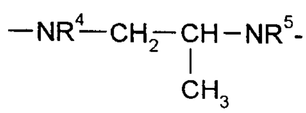 , 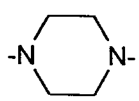 oder

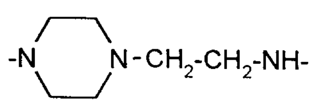 ,

worin

| | |
|---|---|
| $R^4$ und $R^5$ | unabhängig voneinander = H, $CH_3$, $C_2H_5$, $CH_2CH_2OH$, $CH_2CO_2H$ oder $CH_2CH_2CO_2H$ und |
| E = | H, $SO_3H$, $CO_2H$, $CH_3$, $C_2H_5$, $CH_3O$ bzw. $C_2H_5O$, und |
| Z = | ein faserreaktiver heterocyclischer Rest. |

**8.** Reaktivfarbstoffe gemäß wenigstens einem der vorhergehenden Ansprüche, dadurch gekennzeichnet, daß Z ein faserreaktives Triazin, Pyrimidin oder Chinoxalin ist, welches als Substituenten nur Halogen bzw. Halogen und eine Aminogruppe aufweist.

**9.** Reaktivfarbstoffe gemäß wenigstens einem der vorhergehenden Ansprüche, dadurch gekennzeichnet, daß

-B-Z = Rest der folgenden Formeln (III), (IV) und (V)

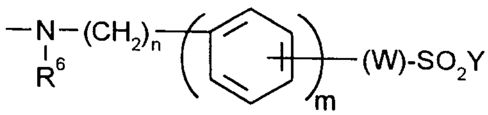

(III)

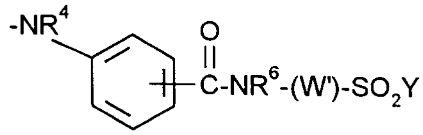

(IV)

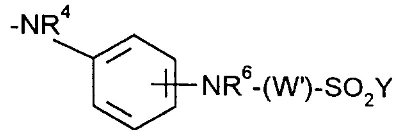

(V)

wobei n, m, W und Y die Bedeutungen wie unter Formel (I) in Anspruch 4 haben,

$R^4$ die in Anspruch 7 genannte Bedeutung zukommt,

W' = $-(CH_2)_{2-3}-$, $-(CH_2)_2-O-(CH_2)_2-$ bzw. Phenylen,

$R^6$ = H, $CH_3$, $C_2H_5$, Phenyl, Sulfophenyl oder ein Rest der Formel (I) mit m = 0,

und den übrigen Substituenten und Indices a, b, c, $R^1$, $R^2$ und X die in Anspruch 1 genannte Bedeutung zukommt.

**10.** Reaktivfarbstoffe gemäß wenigstens einem der vorhergehenden Ansprüche, dadurch gekennzeichnet, daß dem faserreaktiven Rest Z folgende Bedeutung zukommt:

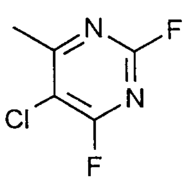

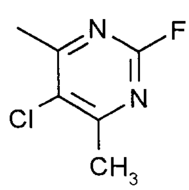

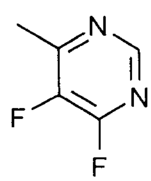

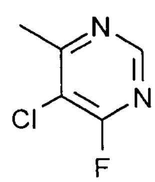

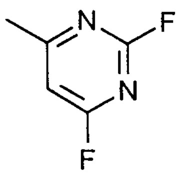
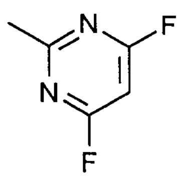
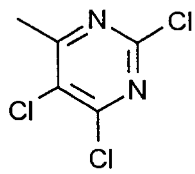
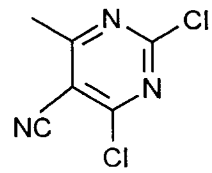

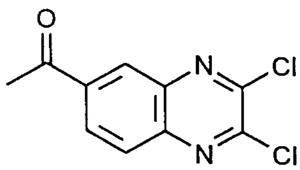
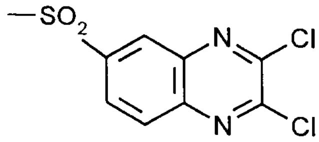

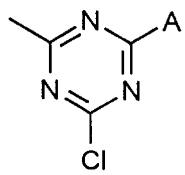
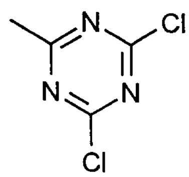
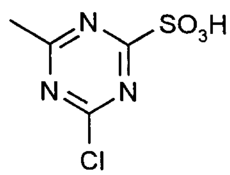

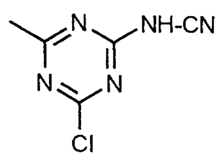
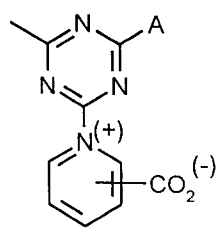
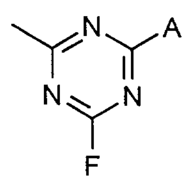

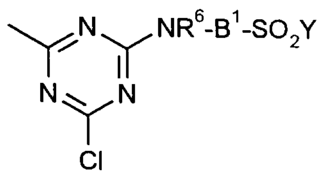
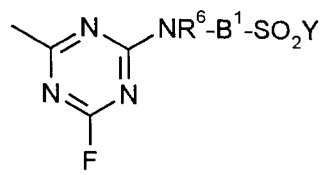

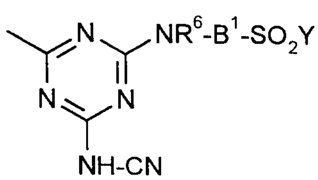
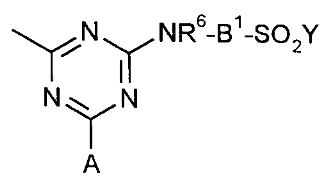

wobei A = $NH_2$, $NHR^7$, $NR^7R^8$, OH, $OR^7$, SH, $SR^7$, $SO_2R^7$,

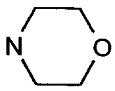 , 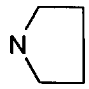 , 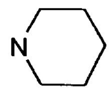 , 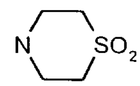 oder 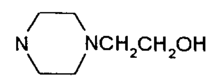

und

$R^7$, $R^8$ = unabhängig voneinander $C_1$-$C_6$-Alkyl, mit OH, $SO_3H$, $OSO_3H$, $CO_2H$ substituiertes $C_1$-$C_6$-Alkyl, Phenyl oder Naphthyl, mit OH, $SO_3H$, $CO_2H$ gegebenenfalls mehrfach substituiertes Phenyl oder Naphthyl und

$B^1$ = Alkylen, Phenylen, Naphthylen, speziell $-(CH_2)_2-$, $-(CH_2)_3-$, $-(CH_2)_2-O-(CH_2)_2-$,

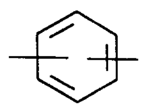 , 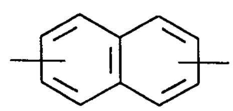 , 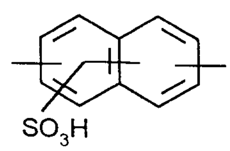

und $R^6$ und Y die in Anspruch 9 bzw. 4 genannten Bedeutungen zukommen.

**11.** Reaktivfarbstoffe gemäß wenigstens einem der vorhergehenden Ansprüche, dadurch gekennzeichnet, daß dem Brückenglied B die Bedeutung eines Restes der Formel (VI) zukommt,

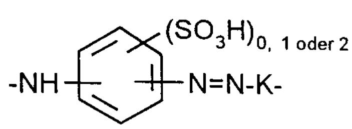 (VI)

wobei der faserreaktive Rest Z an K gebunden ist, und

K = Kupplungskomponente aus der Reihe der Pyrazolone, Pyridone, Naphthole, Aminonaphthole und Amino- und Diaminobenzole, speziell ein Pyridon der Struktur

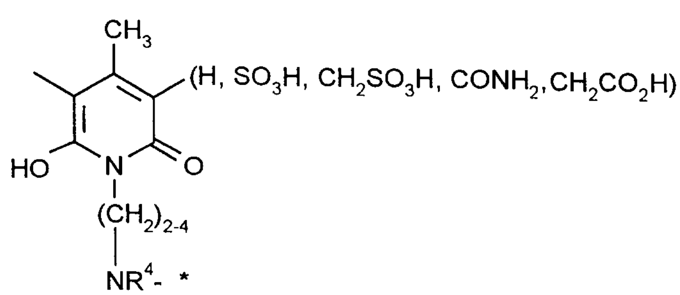

wobei der Stern* die Verknüpfungsstelle mit dem faserreaktiven Rest Z markiert.

**12.** Reaktivfarbstoffe (2) bis (7)

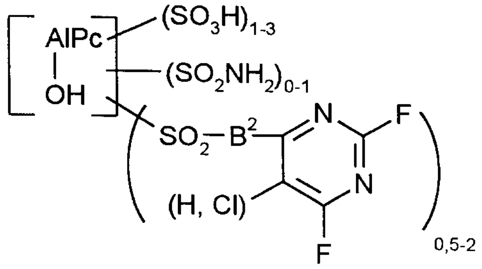

(2)

worin

$B^2$ =

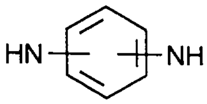 , 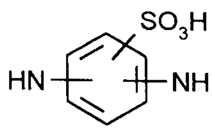 , 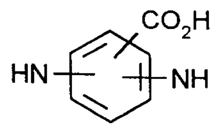 ,

$-NH-CH_2-CH_2-NH-$,

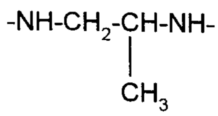 ,

$-NH-(CH_2)_3-NH-$ bzw.

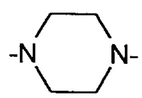

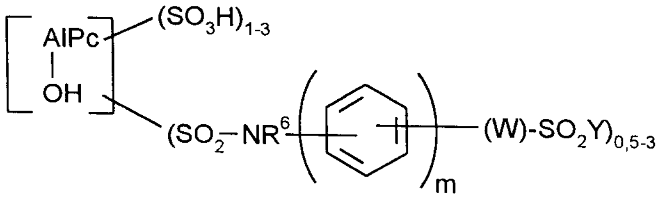

(3)

worin

$R^6$, Y und m die in Anspruch 9 bzw 4 genannte Bedeutung zukommt,

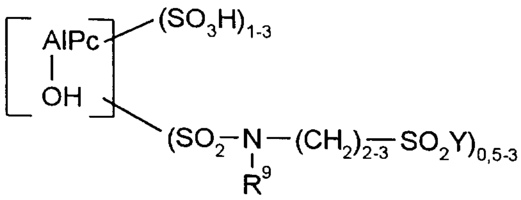

(3a)

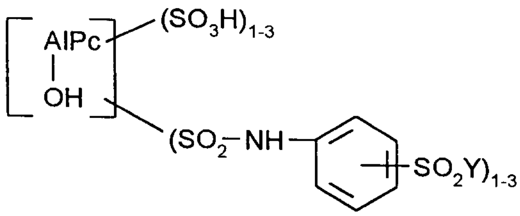

(3b)

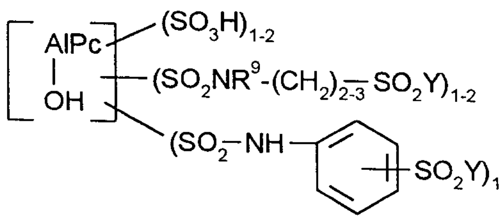

(3c)

worin $R^9$ = H, $CH_3$, $C_2H_5$, Phenyl, $-(CH_2)_{2-3}-SO_2Y$

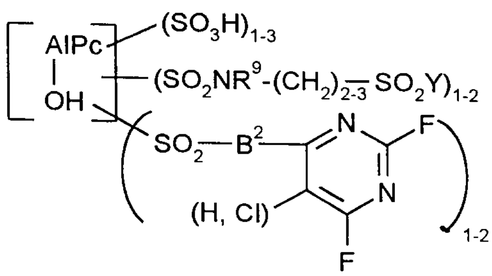

(4)

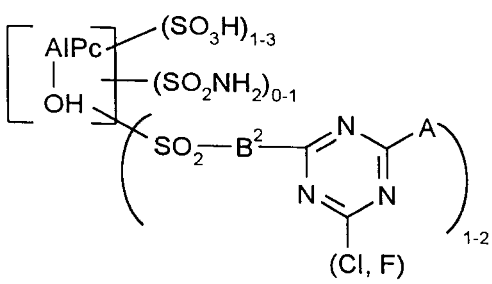

(5)

worin A die in Anspruch 10 genannte Bedeutung zukommt,

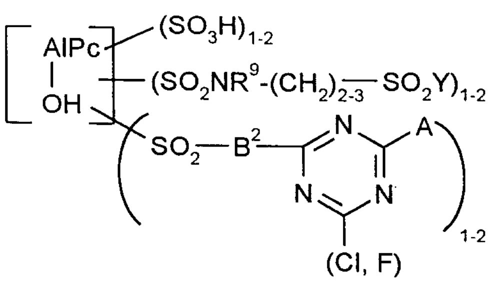

(6)

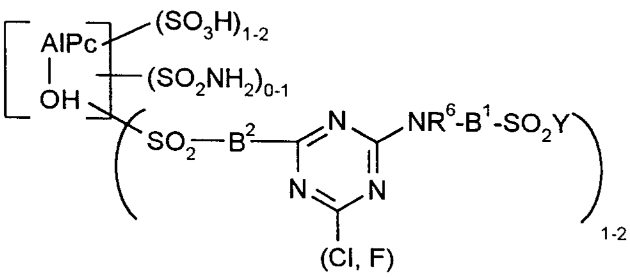

(7)

worin

$B^1$ die in Anspruch 10 genannte Bedeutung zukommt.

**13.** Verfahren zur Herstellung von Verbindungen der Formel 1

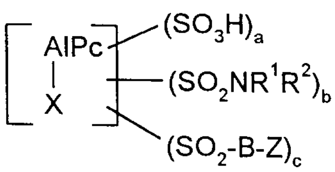

(1)

dadurch gekennzeichnet, daß man Aluminium-Phthalocyanin-Sulfonsäurechloride der Formel

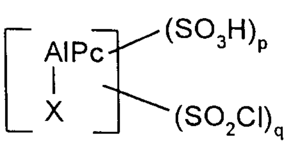

(8)

wobei

p = 0 bis 3 und

q = 1 bis 4, mit der Maßgabe, daß p + q = 2, 3 oder 4,

mit Aminen der Formel (9)

$$H\text{-}B\text{-}Z \qquad (9)$$

und gegebenenfalls Aminen der Formel (10)

$$HNR^1R^2 \qquad (10)$$

umsetzt und anschließend gegebenenfalls noch vorhandene Sulfonsäurechlorid-Gruppen verseift oder indem man eine Verbindung der Formel (11)

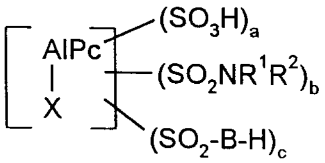

(11)

an einem N-Atom in B mit Triazin-, Pyrimidin- oder Chinoxalin-Reaktivkomponenten der Formel (12)

Z-Hal (12)

wobei Hal = Cl, Br, F
unter Abspaltung von Halogenwasserstoff kondensiert,
wobei die übrigen Substituenten und Indices die in Anspruch 1 angegebene Bedeutung haben.

**14.** Verfahren zum Färben und/oder Bedrucken von hydroxyl- oder amidgruppenhaltigen Materialien mit einem Reaktivfarbstoff, dadurch gekennzeichnet, daß man einen Reaktivfarbstoff gemäß Anspruch 1 auf das Material einwirken läßt.

Europäisches Patentamt

# EUROPÄISCHER RECHERCHENBERICHT

Nummer der Anmeldung
EP 96 11 2428

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | DE 195 21 056 A (SANDOZ AG) 21.Dezember 1995<br>* das ganze Dokument *<br>--- | 1-3,5,7,8,10-14 | C09B62/036<br>C09B62/517<br>//C09B62/10,<br>C09B62/26,<br>C09B62/016 |
| A | DE 43 38 853 A (HOECHST AG) 18.Mai 1995<br>* Ansprüche; Beispiele *<br>--- | 1-14 | |
| A | GB 2 219 804 A (SANDOZ LTD) 20.Dezember 1989<br>* Seite 15, Zeile 1 - Zeile 9; Ansprüche *<br>--- | 1-14 | |
| A,D | EP 0 611 259 A (SANDOZ LTD ;SANDOZ AG (DE)) 17.August 1994<br>* Ansprüche; Beispiele 25,46 *<br>--- | 1-14 | |
| A<br><br>D | FR 2 636 954 A (SANDOZ SA) 30.März 1990<br>* Anspruch 1 *<br>& DE 39 30 738 A<br>--- | 1-14 | |
| A | CH 371 540 A (SANDOZ AG) 15.Oktober 1963<br>* Ansprüche *<br>----- | 1-14 | |

| RECHERCHIERTE SACHGEBIETE (Int.Cl.6) |
|---|
| C09B |

Der vorliegende Recherchenbericht wurde für alle Patentansprüche erstellt

| Recherchenort | Abschlußdatum der Recherche | Prüfer |
|---|---|---|
| DEN HAAG | 13.Dezember 1996 | Ginoux, C |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)